# EUROPEAN PATENT APPLICATION

(11) **EP 1 629 910 A1**
(43) Date of publication of application: **01.03.2006**
(21) Application number: 04731464.6
(22) Date of filing: 06.05.2004
(51) Int. Cl.: B22F 9/24, B22F 1/02

(54) **THREE-ELEMENT METAL COLLOID HAVING THREE-LAYER CORE/SHELL STRUCTURE AND METHOD FOR PREPARING SUCH THREE-ELEMENT METAL COLLOID**

(30) Priority: 06.05.2003 JP 2003127636
(71) Applicant: TANAKA KIKINZOKU KOGYO KABUSHIKI KAISHA, Chuo-ku, Tokyo 103-8206 (JP); Toshima, Naoki, Tokyo 175-0045 (JP)
(72) Inventor: TOSHIMA, Naoki, Itabashi-ku, Tokyo 1750045 (JP); SHIRAISHI, Yukihide, Ube-shi, Yamaguchi 7590203 (JP); KANEMARU, Masao, Tokyo University of Science, Onoda-shi, Yamaguchi 756-0884 (JP)
(74) Representative: Klunker . Schmitt-Nilson . Hirsch
(86) International application number: PCT/JP2004/005965
(87) International publication number: WO 2004/098819

(57) **Abstract**

The present invention relates to a ternary metal colloid comprising metal nanoparticles which is composed of three different metal elements and has a three layer core/shell structure, and to a process for producing the ternary metal colloid. The metal colloid according to the present invention can be produced by mixing a metal colloid comprising metal nanoparticles which is composed of two metal elements and has a core/shell structure with a metal colloid comprising metal nanoparticles which is composed of a metal element different from the two metal elements. A catalyst produced from the metal colloid produced with this process has an extremely high catalytic activity.

## Description

### TECHNICAL FIELD

The present invention relates to a ternary metal colloid having a three layer core/shell structure and a process for producing the ternary metal colloid.

### BACKGROUND ART

In recent years, the application of metal colloids to the manufacture of materials in various fields, such as catalysts, and optical, electrical, and magnetic materials, has been studied. A metal colloid means a state in which fine particles (nanoparticles) of metals, ceramics, etc. having a particle size of 1 to 100 nm, which are insoluble in a solvent, are dispersed and suspended in a solvent, and a colloid solution using a liquid as the solvent is generally known. The nanoparticle means an atom group in the order of nanometers composed of two, three, or more atoms, not of a single atom.

In order to use a metal colloid to produce various materials, usually, the metal colloid is impregnated into a suitable support medium to adsorb nanoparticles. For example, in the case of production of a catalyst, a porous material (carbon fine powder, alumina powder, etc.) called a carrier is used as the support medium, and a metal colloid is adsorbed onto the carrier, whereby the catalyst is produced. It is conceivable that the catalyst in which nanoparticles are carried by using the metal colloid exhibits a reaction behavior different from that of a general catalyst in which an atomic or molecular metal is carried. It is anticipated that future studies will discover the catalyst using a colloid has superior properties.

Some catalysts and optical, electrical, and magnetic materials are produced by adsorbing a plurality of kinds of metal nanoparticles, not one metal nanoparticles. The reason why a plurality of metal nanoparticles are adsorbed is that a synergistic effect of the adsorbed metal nanoparticles is achieved, and thereby the intended performance can be offered more effectively.

In the case where a plurality of kinds of metal nanoparticles are adsorbed, it is deemed better to adsorb the metal nanoparticles in a state wherein different metal nanoparticles are close to each other. Therefore, a metal colloid for adsorbing the plurality of kinds of metal nanoparticles that are close to each other has been studied. However, the conventional study examples mainly relate to a binary metal colloid for adsorbing two metal nanoparticles (the conventional arts relating to the binary metal colloid are disclosed in, for example, the following Patent Documents).
Patent Document 1: Japanese Patent Laid-Open No. 2000-279818
Patent Document 2: Japanese Patent Laid-Open No. 2000-279824

If the adsorbed metal is increased in terms of variety though there will be a limit, it is predicted that the properties of the produced material are also enhanced. Therefore, the present invention provides a ternary metal colloid and a process for producing the same, in which three metal atoms can be arranged in design in a good arrangement state.

### DISCLOSURE OF THE INVENTION

The inventors conducted studies earnestly, and found out a metal colloid comprising metal nanoparticles which is composed of metal particles of three kinds and has a particular structure, thus arriving at the present invention.

Specifically, the present invention provides a ternary metal colloid comprising metal nanoparticles which is composed of three different metal elements and has a three layer core/shell structure.

The three layer core/shell structure means a laminar structure in which metal particles of three kinds are not mixed into one phase, but metallic particles of one kind are covered with metallic particles of other kinds. The nanoparticles having the three layer core/shell structure keep the structure in an intact state even if they are adsorbed onto a support medium. Also, even if the support medium after adsorption is subjected to heat treatment, the nanoparticles do not decompose, and the metal particles constituting the nanoparticles keep their state of being close to each other. Therefore, according to the present invention, three metals can be adsorbed and fixed in a good state in which they are close to each other, and thereby various materials including catalysts having excellent properties can be produced.

In the metal colloid according to the present invention, the metal nanoparticles are preferably protected by a compound called a protective agent. The protective agent means a compound that is chemically or physically bonded to around the nanoparticles in the metal colloid and is adsorbed to restrain the aggregation of nanoparticles and to control and stabilize the particle size distribution to a proper range. By adding the protective agent, the state in which the nanoparticles having a small particle size is suspended is maintained, and in manufacturing a catalyst, the particle size of catalyst particle is decreased, and hence the effective surface area can be made as large as possible. As the protective agent, a chemical species of high molecular weight and low molecular weight which interacts with the metal nanoparticles and is soluble in a solvent is used. Specifically, poly(N-vinyl-2-pyrrolidone), poly(sodium acrylate), polyethylene glycol, a copolymer containing these compounds, or the like is preferably used.

The metal element constituting the nanoparticles is not subject to any special restriction, but considering the application of the metal colloid according to the present invention, platinum, palladium, silver, gold, ruthenium, rhodium, iridium, and osmium are cited as a favorable metal element.

According to the inventors, as a process for producing the metal colloid having a three layer core/shell structure according to the present invention, some processes can be used. First, a first process is to mix metal colloid comprising metal nanoparticles which is composed of two metal elements and has a core/shell structure with a metal colloid comprising metal nanoparticles which is composed of a metal element different from the aforementioned two metal elements. A phenomenon that by merely mixing the two metal colloids in this manner, metal nanoparticles of one kind is arranged so as to surround metal nanoparticles of the other kind is an unexpected one, but has been confirmed by the verification of the inventors.

The steps of the first production process is explained in detail. The first production process includes a step of producing a first metal salt solution in which two metal ions are dispersed by dissolving two metal salts into a first solvent, and producing a first colloid solution comprising metal nanoparticles which is composed of two metal elements and has a core/shell structure by reducing the two metal ions in the first metal salt solution; a step of producing a second colloid solution as nanoparticles by dissolving one metal salt different from the two metal salts into a second solvent and by reducing the one metal ion; and a step of mixing the first colloid solution with the second colloid solution.

The metal colloid according to the present invention is preferably protected by a protective agent. This protective agent is preferably added together with the metal salts when the first and second colloid solutions are produced. As the protective agent to be added, poly(N-vinyl-2-pyrrolidone), poly(sodium acrylate), polyethylene glycol, a copolymer containing these compounds, or the like is preferably used.

Also, when the first and second colloid solutions are produced, the metal ions are preferably reduced by the addition of a reducing agent. To reduce a noble metal salt in the solution, a method in which the noble metal salt is reduced electrochemically by inserting an electrode into the solution to perform energization can also be used. However, the method in which a reducing agent is added enables homogeneous reduction. Also, in the case of electrochemical reduction, a power source, electrode, and control unit for reducing the solution are required, and the equipment configuration for producing colloid solution is complicated. Also, it is difficult to set the current, voltage, and other conditions for performing reduction properly. As the reducing agent, any of an inorganic or organic compound of gas, liquid, or solid, or physical energy, which has a force for reducing metal ions, can be used. Specifically, hydrogen, hydrazine, sodium borohydride (NaBH₄), alcohols such as ethanol and methanol, citric acid, N-methylpyrrolidone, dimethylformamide, diethylaminoboron, formaldehyde, light (visible rays, ultraviolet rays), gamma rays, ultrasonic waves, and the like can be used.

In the case where the protective agent can perform a reducing action, the colloid can be produced by mixing the metal salt with the protective agent by means of a solvent without the addition of a reducing agent. Also, as the solvent, water, methanol, tetrahydrofuran, acetone, and the like can be used. In the case where a solvent that can perform a reducing action is used, the colloid can be produced without an addition of a reducing agent.

A mixing ratio between the first colloid solution and the second colloid solution exerts an influence on the quantity of metal arranged in the outermost layer of metal nanoparticles, and also exerts an influence on the properties thereof. If the mixed quantity of second colloid solution is too small, the colloid is substantially no different from the colloid having a two layer structure. The mixing ratio between the two solutions changes according to the composition of metal elements constituting the first colloid solution. The mixing ratio (first colloid solution:second colloid solution, metal atom ratio) is preferably 1:0.5 to 1:50, far preferably 1:2 to 1:15.

A second production process for the metal colloid according to the present invention basically involves producing a unitary or binary metal colloid is produced, and providing the metal nanoparticles in the metal colloid with an activity as a reduction catalyst. Specifically, in the case of using the former unitary metal colloid, after a unitary metal colloid is produced, and the metal nanoparticles in the metal colloid are provided with an activity as a reduction catalyst, this metal colloid is mixed with a metal salt solution to produce a binary metallic colloid, and further the metal colloid in which the nanoparticles in the binary metal colloid are provided with an activity as a reduction catalyst is mixed with a metal salt solution to form a ternary metal colloid. In the case of using the latter binary metal colloid, after a binary metal colloid is produced, and the metal nanoparticles in the metal colloid are provided with an activity as a reduction catalyst, this metal colloid is mixed with a metal salt solution to form a ternary metallic collide. In these cases, since the activity as a reduction catalyst of metal nanoparticles is utilized, the metal ions are easily reduced on the surface of metal nanoparticles, and hence metal nanoparticles of a desired form can be formed.

The step of the second production process is explained in detail. The second production process includes a step of producing a solution in which first metal ions are dispersed in a solvent by dissolving a first metal salt into a first solvent, and producing a first colloid solution by reducing the first metal ions; a step of providing first metal nanoparticles in the first colloid solution with an activity as a reduction catalyst; a step of producing a second metal salt solution by dissolving a second metal salt into a second solvent, and mixing the first metal nanoparticles with the second metal salt solution and reducing second metal ions to form a binary colloid solution; a step of providing second metal nanoparticles in the binary colloid solution with an activity as a reduction catalyst; and a step of producing a third metal salt solution by dissolving a third metal salt into a third solvent, and mixing the second metal nanoparticles with the third metal salt solution and reducing third metal ions.

Also, the second production process includes a step of producing a first metal salt solution in which two metal ions are dispersed in a solvent by dissolving two metal salts into a first solvent, and producing a colloid solution comprising metal nanoparticles which is composed of two metal elements and has a core/shell structure by reducing the two metal ions in the first metal salt solution; a step of providing the metal nanoparticles in the first colloid solution with an activity as a reduction catalyst; and a step of producing a second metal salt solution by dissolving one metal salt different from the two metal salts into a second solvent, and mixing the metal nanoparticles with the second metal salt solution and reducing metal ions in the second metal salt solution.

In the step of providing the nanoparticles in the produced colloid solution with an activity as a reduction catalyst, in addition to a method in which the nanoparticles are treated by hydrogen molecules, whereby hydrogen is adsorbed onto the surface of nanoparticles, a method in which metal nanoparticles are treated by a reducing chemical species or a reducing agent is used. With this method as well, when a metal colloid is produced, a protective agent and a reducing agent are preferably used. The details thereof are the same as those in the first production process.

A third production process according to the present invention is what is called a simultaneous reduction process, in which a metal salt solution in which three metal ions are dispersed in a solvent is produced by dissolving three different metal salts into a solvent, and the three metal ions are reduced.

With the third production process as well, a protective agent is preferably added, and to reduce metal ions, a reducing agent is preferably added. The details thereof are the same as those in the first and second production processes.

### BRIEF DESCRIPTION OF THE DRAWINGS

Fig. 1 is an FT-IR spectrum of a unitary metal colloid composed of platinum, palladium, or rhodium;
Fig. 2 is an FT-IR spectrum of a binary metal colloid composed of platinum and palladium; and
Fig. 3 is an FT-IR spectrum of a ternary metal colloid composed of platinum, palladium, and rhodium.

### BEST MODE FOR CARRYING OUT THE INVENTION

Preferred embodiments of the present invention will now be described together with comparative examples.
First embodiment: In a first embodiment, a binary metal colloid composed of platinum and palladium and a unitary metal colloid composed of rhodium were produced, and the two colloids were mixed with each other to produce a ternary metal colloid composed of platinum, palladium, and rhodium.
Production of binary metal colloid composed of platinum and palladium: PVP weighing 0.5868 g (0.66 mmol: R = 40) was extracted, and was agitated in a nitrogen atmosphere for 15 minutes after 92 cm³ of water was added. After agitation, 1.6 cm³ of hexachloroplatinic (IV) acid (H₂[PtCl₆]₆) aqueous solution and 6.4 cm³ of palladium chloride (PdCl₂) aqueous solution of 0.0166 M were added to the PVP solution, and the solution was agitated for 30 minutes. To this agitated solution, 100 cm³ of ethanol was added as a reducing agent so that the water-to-ethanol ratio should be 1:1. Refluxing by heating was performed for 2 hours, whereby a PVP-protected binary metal colloid composed of platinum and palladium was obtained.
Production of unitary metal colloid: PVP weighing 0.5868 g (0.66 mmol: R = 40) was extracted, and was agitated in a nitrogen atmosphere for 15 minutes after 96.6 cm³ of water was added. After agitation, 3.4 cm³ of rhodium chloride (III) (RhCl₃) aqueous solution of 0.0166 M was added to the PVP solution, and the solution was agitated for 30 minutes. To this agitated solution, 100 cm³ of ethanol was added as a reducing agent so that the water-to-ethanol ratio should be 1:1. Refluxing by heating was performed for 2 hours, whereby a PVP-protected unitary metal colloid composed of rhodium was obtained.
Production of ternary metal colloid composed of platinum, palladium, and rhodium: The PVP-protected binary metal colloid composed of platinum and palladium (0.66 mM, water:ethanol = 1:1) and the PVP-protected unitary metal colloid composed of rhodium (0.66 mM, water:ethanol = 1:1), which were produced as described above, were physically mixed with each other at room temperature. Thereby, rhodium nanoparticles were arranged on the palladium surface of platinum/palladium nanoparticle in the binary metal colloid composed of platinum and palladium, whereby a ternary metal colloid composed of platinum, palladium, and rhodium could be produced.
Verification of particle structure: The particle structure of the ternary metal colloid composed of platinum, palladium, and rhodium, which was produced as described above, was investigated. This investigation was carried out with the use of an FT-IR spectrum, and the particle structure was determined from a change in absorption spectrum at the time when carbon monoxide was adsorbed onto the ternary colloid. Samples for IR analysis were prepared as described below. After the solvent of each colloid solution was distilled off, the colloid solution was dried under reduced pressure at 40°C. Thereafter, the dried colloid was dispersed in dichloromethane. A half of fluid dispersion was put into a Schlenk tube of 50 mL to perform freeze-deairing, and was exposed to a carbon monoxide atmosphere. After the operation of freeze-deairing and exposure to carbon monoxide atmosphere was repeated three times, the solution was agitated further in a carbon monoxide atmosphere for 1 hour, whereby a sample was prepared.

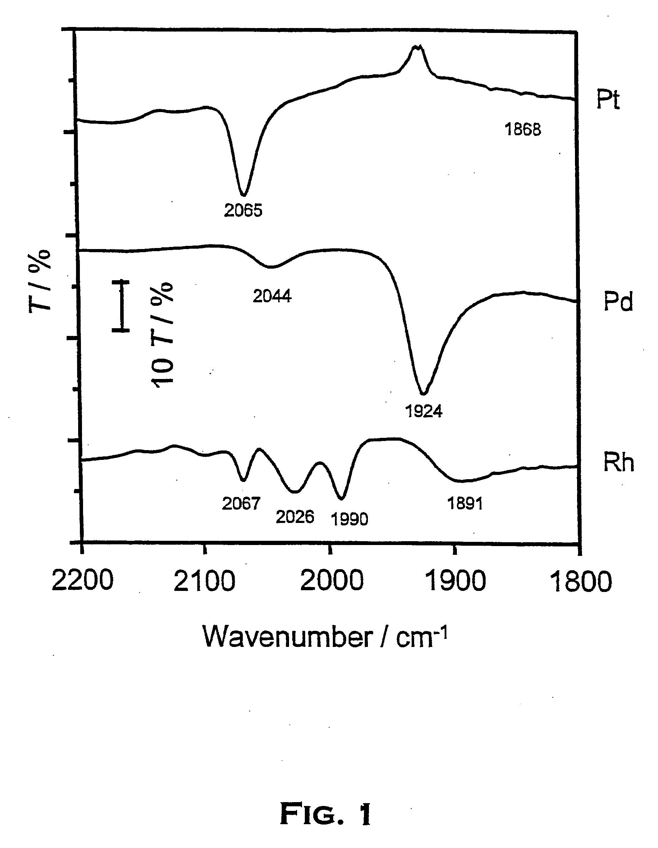

The results of this investigation are shown in Figs. 1 to 3. Fig. 1 shows absorption spectra of unitary metal colloid composed of platinum and unitary metal colloid composed of palladium, which were produced for this investigation, in addition to the aforementioned unitary metal colloid composed of rhodium. From these spectra, in the unitary metal colloid composed of platinum, a strong linear absorption peak was observed near a wave number of 2065 cm⁻¹, and a weak bridging peak was observed near a wave number of 1868 cm⁻¹. Also, in the unitary metal colloid composed of palladium, strong peaks were observed near wave numbers of 2044 cm⁻¹ and 1924 cm⁻¹. Further, in the unitary metal colloid composed of rhodium, peaks were observed near wave numbers of 2065 cm⁻¹, 2026 cm⁻¹, 1990 cm⁻¹, and 1891 cm⁻¹.

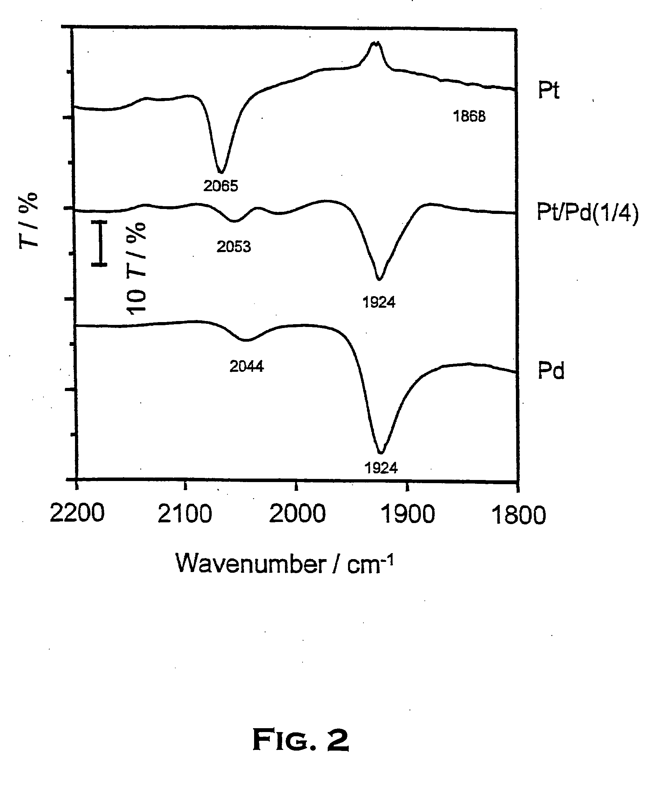

Fig. 2 shows an absorption spectrum at the time when carbon monoxide is adsorbed onto a binary metal colloid composed of platinum and palladium. According to this spectrum, a strong peak that seems to be resulted from palladium was observed near a wave number of 1924 cm⁻¹. From this result, it was recognized that the particles constituting the binary colloid have a core/shell structure in which platinum is covered with palladium.

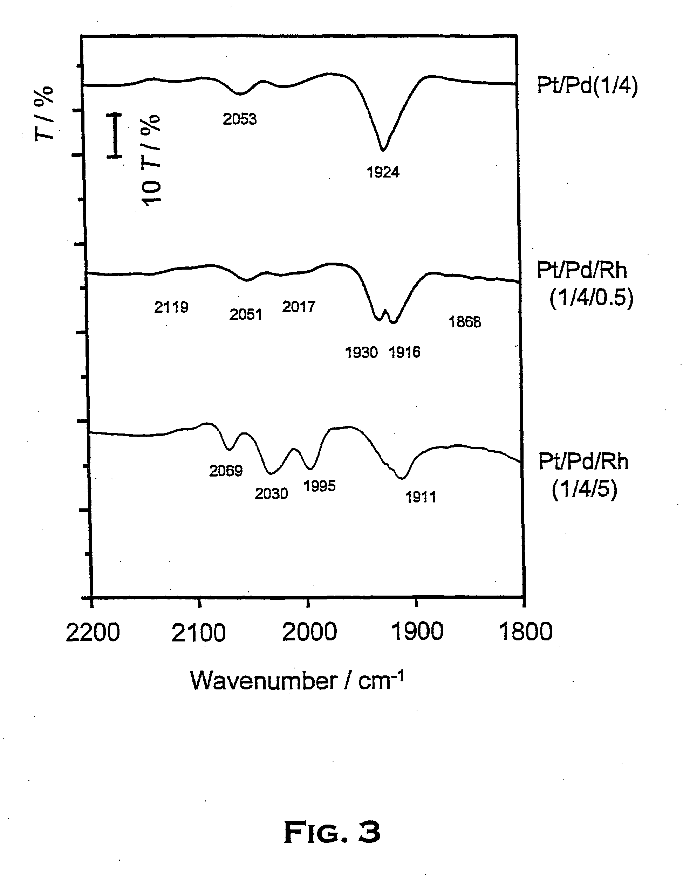

Fig. 3 shows absorption spectra at the time when carbon monoxide is adsorbed onto ternary colloids produced in this embodiment. From Fig. 3, regarding the adsorption peak of ternary colloid, a peak (near 1924 cm⁻¹) inherent in palladium disappears due to the addition of unitary metal colloid composed of rhodium, and peaks inherent in rhodium are formed near wave numbers of 2065 cm⁻¹, 2026 cm⁻¹, 1990 cm⁻¹, and 1891 cm⁻¹. That is to say, the nanoparticles in this colloid have a three layer core/shell structure the outermost layer of which is composed of rhodium. Also, this tendency becomes remarkable as the mixing ratio of rhodium colloid increases. Evaluation of catalytic activity: A catalyst was adjusted by using the ternary colloid produced in this embodiment, whereby the catalytic activity was evaluated. The catalyst was produced by diluting the produced metal colloid solution with a volume of 0.3 mL with 18.7 mL of ethanol, and by agitating the solution at 30°C and 1 atm in a hydrogen atmosphere for 30 minutes to several hours in a form of fluid dispersion of catalyst until hydrogen is not absorbed. Also, the catalytic activity was evaluated by subjecting the fluid dispersion of catalyst to hydrogenation reaction of methyl acrylate and by investigating the hydrogenated catalytic activity at this time. More specifically, in a hydrogenating apparatus, 1 mL of ethanol solution of 0.5 mol/L of methyl acrylate was added to the aforementioned fluid dispersion of catalyst with a volume of 19 mL as a substrate to make the metal mol concentration in ethanol 10 µmol/L, and the reaction was carried out at normal pressure. The measurement was continued until the hydrogenation reaction ended. The hydrogenating catalytic activity was evaluated as described below. A consumption of hydrogen gas was measured in the hydrogenation reaction and the measurement results were plotted on a graph, the initial rate was determined by the least-square method, and what mol of hydrogen molecules had been consumed per unit time by 1 mol of metal was calculated. The result is given in Table 1. For comparison, Table 1 also gives the investigation results of catalysts prepared by binary and unitary colloids.

**[Table 1]**

| | Hydrogenating catalytic activity |
|---|---|
| | (mol-H₂·mol-M⁻¹·s⁻¹) |
| Pt/Pd/Rh ternary colloid | 22.5 |
| Pt/Pd binary colloid | 14.0 |
| Pt unitary colloid | 1.3 |
| Pd unitary colloid | 7.8 |
| Rh unitary colloid | 8.8 |

From Table 1, it was verified that the catalyst prepared by the ternary colloid in accordance with this embodiment has a highest catalytic activity among the catalysts having been evaluated in this investigation, the catalytic activity being about 2.5 to 17 times of that of unitary colloid, and about 1.5 times of that of binary colloid.

Also, the activity per unit surface area was calculated, and the following calculation result was obtained.

**[Table 2]**

| | Hydrogenating catalytic activity |
|---|---|
| | (mol-H₂·m-M⁻²·s⁻¹) |
| Pt/Pd/Rh ternary colloid | 23.7 |
| Pt/Pd binary colloid | 14.7 |
| Pt unitary colloid | 1.2 |
| Pd unitary colloid | 8.0 |
| Rh unitary colloid | 8.5 |

As seen from Table 2, it was verified that the catalyst produced based on the ternary colloid produced in this embodiment has a highest activity, and exhibits a high activity without depending on the particle size.
Second embodiment: In a second embodiment, a ternary metal colloid was produced by the second production process of this patent application, namely, by mixing a binary metal colloid having an activity as a reduction catalyst with a metal salt solution. PVP weighing 2.9340 g was extracted, and was agitated for 20 minutes after 100 cm³ of ethylene glycol was added. Then, 7.2 cm³ of hexachloroplatinic (IV) acid aqueous solution of 0.0166 M was added to the PVP solution to adjust the pH value to 10. In a nitrogen atmosphere, refluxing by heating was performed at 190°C for 3 hours. Thereafter, the solution was filtrated with an ultrafilter, and was vacuum dried at 40°C.

The platinum nanoparticles extracted by the above-described method were dispersed in 150 cm³ of mixed solution of water, ethanol, and ethylene glycol (water:ethanol:ethylene glycol = 1:1:1), and hydrogen was adsorbed onto the nanoparticles in a hydrogen atmosphere. Then, 100 cm³ solution of palladium chloride of 0.0166 M was dripped by taking time of 4 to 6 hours, and after dripping, the mixed solution was agitated for 8 hours. Thereafter, the solution was filtrated with an ultrafilter, and was vacuum dried at 40°C, whereby Pt/Pd binary nanoparticles were obtained.

After the Pt/Pd binary nanoparticles were dispersed in 150 cm³ of mixed solution of water, ethanol, and ethylene glycol like the mixed solution described above, hydrogen was adsorbed onto the nanoparticles in a hydrogen atmosphere. Further, 100 cm³ of rhodium chloride of 0.0386 M was dripped by taking time of 4 to 6 hours, and after dripping, the mixed solution was agitated for 8 hours. Thereafter, the solution was filtrated with an ultrafilter, and was vacuum dried at 40°C. Finally, water and ethanol were added to the dried powder so that the mixing ratio should be 1:1, whereby a ternary colloid solution containing platinum, palladium, and rhodium was obtained.
Third embodiment: In a third embodiment, a ternary metal colloid was produced by the third production process of this patent application, namely, the simultaneous reduction process. PVP weighing 0.5868 g (0.66 mmol: R = 40) was extracted, and was agitated in a nitrogen atmosphere for 15 minutes after 92.5 cm³ of water was added. After agitation, 5.8 cm³ of hexachloroplatinic (IV) acid aqueous solution, 1.4 cm³ of palladium chloride aqueous solution, and 0.3 cm³ of rhodium chloride aqueous solution of 0.0166 M were added to the PVP solution, and the solution was agitated for 30 minutes. To this agitated solution, 100 cm³ of ethanol was added as a reducing agent so that the water-to-ethanol ratio should be 1:1. Refluxing by heating was performed for 2 hours, whereby a PVP-protected ternary metal colloid composed of platinum, palladium, and rhodium was obtained.

For the ternary metal colloid composed of platinum, palladium, and rhodium produced in the above-described second and third embodiments, the structure of nanoparticles in the colloid was investigated with the use of an FT-IR spectrum as in the case of the first embodiment. As a result, almost the same result as that of the first embodiment was obtained, but the catalytic activity was slightly lower than that in the first embodiment.

## Claims

1. A ternary metal colloid comprising metal nanoparticles which is composed of three different metal elements and has a three layer core/shell structure.

2. The ternary metal colloid according to claim 1, wherein the metal element is any of platinum, palladium, silver, gold, ruthenium, rhodium, iridium, osmium, iron, cobalt, nickel, copper, and indium.

3. The ternary metal colloid according to claim 1 or 2, wherein the metal nanoparticles are protected by a protective agent.

4. The ternary metal colloid according to claims 1 to 3, wherein the protective agent is poly(N-vinyl-2-pyrrolidone), poly(sodium acrylate), polyethylene glycol, or a copolymer containing these compounds.

5. A process for producing the ternary metal colloid, said ternary metal colloid being defined in claims 1 to 4, comprising the steps of:
producing a first metal salt solution in which two metal ions are dispersed by dissolving two metal salts into a first solvent, and producing a first colloid solution comprising metal nanoparticles which is composed of two metal elements and has a core/shell structure by reducing the two metal ions in the first metal salt solution;
producing a second colloid solution as nanoparticles by dissolving one metal salt different from the two metal salts into a second solvent and by reducing the one metal ion; and
mixing the first colloid solution with the second colloid solution.

6. The process for producing the ternary metal colloid according to claim 5, wherein when the first and second colloid solutions are produced, a protective agent is added together with the metal salts.

7. The process for producing the ternary metal colloid according to claim 6, wherein the protective agent is poly(N-vinyl-2-pyrrolidone), poly(sodium acrylate), polyethylene glycol, or a copolymer containing these compounds.

8. The process for producing the ternary metal colloid according to claims 5 to 7, wherein when the first and second colloid solutions are produced, the metal ions are reduced by the addition of a reducing agent.

9. The process for producing the ternary metal colloid according to claims 5 to 8, wherein the reducing agent is hydrogen, hydrazine, sodium borohydride (NaBH₄), alcohol, citric acid, N-methylpyrrolidone, dimethylformamide, diethylaminoboron, formaldehyde, visible rays, ultraviolet rays, gamma rays, or ultrasonic waves.

10. A process for producing the ternary metal colloid, said ternary metal colloid being defined in claims 1 to 4, comprising the steps of:
producing a solution in which first metal ions are dispersed in a solvent by dissolving a first metal salt into a first solvent, and producing a first colloid solution by reducing the first metal ions;
providing first metal nanoparticles in the first colloid solution with an activity as a reduction catalyst;
producing a second metal salt solution by dissolving a second metal salt into a second solvent, and mixing the first metal nanoparticles with the second metal salt solution and reducing second metal ions to form a binary colloid solution;
providing second metal nanoparticles in the binary colloid solution with an activity as a reduction catalyst; and
producing a third metal salt solution by dissolving a third metal salt into a third solvent, and mixing the second metal nanoparticles with the third metal salt solution and reducing third metal ions.

11. A process for producing the ternary metal colloid, said ternary metal colloid being defined in claims 1 to 4, comprising the steps of:
producing a first metal salt solution in which two metal ions are dispersed in a solvent by dissolving two metal salts into a first solvent, and producing a colloid solution comprising metal nanoparticles which is composed of two metal elements and has a core/shell structure by reducing the two metal ions in the first metal salt solution;
providing the metal nanoparticles in the first colloid solution with an activity as a reduction catalyst; and
producing a second metal salt solution by dissolving one metal salt different from the two metal salts into a second solvent, and mixing the metal nanoparticles with the second metal salt solution and reducing metal ions in the second metal salt solution.

12. The process for producing the ternary metal colloid according to claim 10 or 11, wherein in the step of providing the nanoparticles in the produced colloid solution with an activity as a reduction catalyst, hydrogen is adsorbed onto the nanoparticles.

13. The process for producing the ternary metal colloid according to claim 11 or 12, wherein the metal ions in the metallic salt solution are reduced through adding a reducing agent to the solution.

14. The process for producing the ternary metal colloid according to claim 13, wherein the reducing agent is hydrogen, hydrazine, sodium borohydride (NaBH₄), alcohol, citric acid, N-methylpyrrolidone, dimethylformamide, diethylaminoboron, formaldehyde, visible rays, ultraviolet rays, gamma rays, or ultrasonic waves.

15. A process for producing the ternary metal colloid, said ternary metal colloid being defined in claims 1 to 4, comprising the steps of:
producing a metal salt solution in which three metal ions are dispersed in a solvent by dissolving three different metal salts into a solvent; and
reducing the three metal ions.

16. The process for producing the ternary metal colloid according to claim 15, wherein the metal ions are reduced by adding a reducing agent to the solution.

17. The process for producing the ternary metal colloid according to claim 16, wherein the reducing agent is hydrogen, hydrazine, sodium borohydride (NaBH₄), alcohol, citric acid, N-methylpyrrolidone, dimethylformamide, diethylaminoboron, formaldehyde, visible rays, ultraviolet rays, gamma rays, or ultrasonic waves.

18. The process for producing the ternary metal colloid according to claim 15 to 17, wherein when the solution is produced, a protective agent is added together with the metal salts.

19. The process for producing the ternary metal colloid according to claim 18, wherein the protective agent is poly(N-vinyl-2-pyrrolidone), poly(sodium acrylate), polyethylene glycol, or a copolymer containing these compounds.
